# EUROPÄISCHE PATENTANMELDUNG

(11) **EP 3 361 049 A1**
(43) Veröffentlichungstag der Anmeldung: **15.08.2018**
(21) Anmeldenummer: 17155610.3
(22) Anmeldetag: 10.02.2017
(51) Int. Cl.: F01D 5/02, F01D 5/14

(54) **VERFAHREN ZUM MODIFIZIEREN EINER TURBINE**

(71) Anmelder: Siemens Aktiengesellschaft, 80333 München (DE)
(72) Erfinder: Ahmad, Fathi, 41564 Kaarst (DE); Buchal, Tobias, 40489 Düsseldorf (DE); Gand, Olivier, 40472 Düsseldorf (DE)

(57) **Zusammenfassung**

Die Erfindung betrifft ein Verfahren zum Modifizieren einer Turbine (1) mit in einem konisch ausgebildeten Gehäuse (2) angeordneten Laufschaufelkränzen (3a, 3b, 3c, 3d) und Leitschaufelkränzen (4a, 4b, 4c, 4d), bei dem ein ursprünglicher Laufschaufelkranz (3a, 3b, 3c, 3d) an einer ersten Laufschaufelposition (I) durch einen Austausch-Laufschaufelkranz (3') an einer zweiten Laufschaufelposition (II) ersetzt wird, wobei die zweite Laufschaufelposition (II) entlang einer Erstreckungsrichtung einer Rotorwelle (11) der Turbine (1) in Strömungsrichtung (S) eines die Turbine (1) durchströmenden Arbeitsmediums beabstandet von der ersten Laufschaufelposition (I) angeordnet wird.

## Beschreibung

Die Erfindung betrifft ein Verfahren zum Modifizieren einer Turbine.

Unter thermischen Strömungsmaschinen (auch Turbomaschinen genannt) werden dabei Maschinen verstanden, bei denen eine Energieübertragung zwischen einem Arbeitsmedium (Flüssigkeit oder Gas) und der thermische Strömungsmaschinen in einem offenen Raum durch eine Strömung nach den Gesetzen der Fluiddynamik über den Umweg der kinetischen Energie erfolgt.

Eine derartige thermische Strömungsmaschine, wie z.B. eine Gasturbine, kann einen Verdichter und eine Turbine aufweisen. Der Verdichter ist zum Komprimieren von einem gasförmigen Arbeitsmedium ausgebildet, während die Turbine die innere Energie eines strömenden Arbeitsmediums in mechanische Energie umwandelt, die sie über eine Turbinenwelle abgibt.

Thermische Strömungsmaschinen weisen eine Beschaufelung auf, die die Gesamtheit der Schaufeln z.B. der Turbine umfasst. Unterschieden wird dabei zwischen Lauf- und Leitschaufeln. Ein Kranz von Laufschaufeln mit dem zugehörigen Kranz von Leitschaufeln wird als Stufe bezeichnet. Die Beschaufelung der Turbine und/oder des Verdichters kann mehrstufig sein.

Die Leitschaufeln sind fest in einem Gehäuse der Turbine eingebaut und leiten das Arbeitsmittel im optimalen Winkel auf die Laufschaufeln, die sich auf drehbaren Wellen befinden. Über die Laufschaufeln findet die Kopplung der mechanisch nutzbaren Leistung zwischen der thermischen Strömungsmaschine und dem Arbeitsmittel statt.

Bei der Angabe der Stufenanzahl der Turbine ist die Anzahl der Laufschaufelkränze maßgebend: Eine z.B. fünfstufige Turbine hat fünf Laufschaufelkränze. Die Leitschaufelkränze werden bei Verdichtern meist dem vorausgehenden Laufschaufelkranz zugeordnet, bei Turbinen meist dem nachfolgenden Laufschaufelkranz.

Schaufeln, d.h. Lauf- oder Leitschaufeln, weisen ein Schaufelblatt, eine an das Schaufelblatt angefügte Plattform, einen an die Plattform angefügten Fuß mit einem Befestigungsabschnitt zum Befestigen der Schaufel an dem Gehäuse der Turbine auf.

Jedoch ist eine Anpassung einer derartigen thermischen Strömungsmaschine an veränderte Anforderungen, insbesondere an gesteigerte Leistungsanforderungen, nur mit erheblichem Aufwand möglich.

Es besteht daher Bedarf daran, zumindest einen Weg aufzuzeigen, wie eine Turbine mit geringem Aufwand modifiziert werden kann.

Erfindungsgemäß wird zum Modifizieren einer Turbine mit in einem konisch ausgebildeten Gehäuse angeordneten Laufschaufelkränzen und Leitschaufelkränzen ein ursprünglicher Laufschaufelkranz an einer ersten Laufschaufelposition durch einen Austausch-Laufschaufelkranz an einer zweiten Laufschaufelposition ersetzt, wobei die zweite Laufschaufelposition entlang einer Erstreckungsrichtung einer Rotorwelle der Turbine in Strömungsrichtung eines die Turbine durchströmenden Arbeitsmediums beabstandet von der ersten Laufschaufelposition angeordnet ist. Hierdurch wird auf überraschend einfache Weise möglich, eine Turbine zu modifizieren, um sie an erhöhte Leistungsanforderungen anzupassen. Zugleich kann so die Machzahl des Arbeitsmediums reduziert werden.

Bevorzugt weist der Austausch-Laufschaufelkranz einen größeren Außendurchmesser als der ursprüngliche Laufschaufelkranz auf. Somit erfolgt eine Anpassung an einen vergrößerten Innendurchmesser des Gehäuses, so dass eine besonders energieeffiziente Turbine bereitgestellt wird.

Bevorzugt wird ein Positionierelement zur Festlegung des Austausch-Laufschaufelkranzes an der zweiten Laufschaufelposition zwischen dem Austausch-Laufschaufelkranz und einem Leitschaufelkranz angeordnet. So kann auf besonders einfache Weise der Austausch-Laufschaufelkranz an der zweiten Laufschaufelposition festgelegt werden.

Bevorzugt wird als Positionierelement ein separates Bauteil verwendet. So kann eine Festlegung der Position des Austausch-Laufschaufelkranzes ohne Modifikation des Austausch-Laufschaufelkranzes erfolgen.

Bevorzugt wird ein als Distanzscheibe oder Ring ausgebildetes Positionierelement verwendet. So kann ein besonders einfach zu fertigendes Positionierelement verwendet werden.

Bevorzugt wird das Positionierelement an dem Austausch-Laufschaufelkranz angeformt. Somit entfällt eine Montage zusätzlicher Bauteile.

Bevorzugt wird das Positionierelement durch eine Verlängerung an einem Balkon eines Fußes einer Austausch-Laufschaufel des Austausch-Laufschaufelkranz gebildet. So kann durch eine besonders einfache Abwandlung einer Laufschaufel das Positionierelement gebildet werden.

Bevorzugt wird ein Positionierelement zur Festlegung des Austausch-Laufschaufelkranz an der zweiten Laufschaufelposition durch eine Verkürzung eines Fußes einer Austausch-Laufschaufel des Austausch-Laufschaufelkranz gebildet wird. So kann durch eine besonders einfache Abwandlung eines Fußes einer Laufschaufel das Positionierelement gebildet werden.

Ferner gehören zur Erfindung eine derartig modifizierte Turbine und ein Laufschaufelkranz für eine derartige Turbine sowie eine Austausch-Laufschaufel für einen derartigen Austausch-Laufschaufelkranz.

Im Folgenden wird eine bevorzugte Ausführungsform des erfindungsgemäßen Verfahrens anhand der beigefügten schematischen Zeichnungen erläutert. Es zeigt:
Fig. 1 eine schematische Darstellung eines Abschnitts einer Turbine.
Fig. 2 eine schematischer Darstellung einer Modifikation der in Fig. 1 gezeigten Turbine.
Fig. 3 ein Detail der modifizierten Turbine.

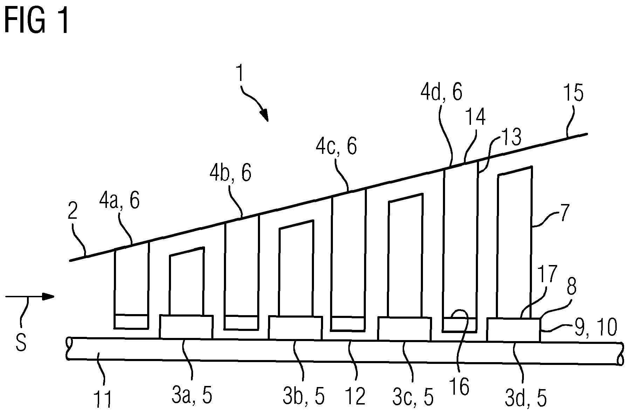

Es wird zunächst auf Fig. 1 Bezug genommen.

Dargestellt ist eine Turbine 1, die im vorliegenden Ausführungsbeispiel als Axialturbine 1 ausgebildet ist.

Die Turbine 1 ist im vorliegenden Ausführungsbeispiel vierstufig ausgebildet, d.h. die Turbine 1 weist eine Beschaufelung mit vier Laufschaufelkränzen 3a, 3b, 3c, 3d und drei Leitschaufelkränzen 4a, 4b, 4c, 4d auf.

Die Laufschaufelkränze 3a, 3b, 3c, 3d weisen jeweils eine Mehrzahl von Laufschaufeln 5 auf, während die Leitschaufelkränze 4a, 4b, 4c, 4d jeweils eine Mehrzahl von Leitschaufeln 6 aufweisen.

Die Laufschaufelkränze 3a, 3b, 3c, 3d und die Leitschaufelkränze 4a, 4b, 4c, 4d sind abwechselnd hintereinander in einem Gehäuse 2 in Strömungsrichtung eines Arbeitsmediums angeordnet, das die Turbine 1 durchströmt, beginnend mit dem Leitschaufelkranz 4a, gefolgt von dem Laufschaufelkranz 3a usw. Dabei ist das Gehäuse 2 konisch ausgebildet und weitet sich in Strömungsrichtung S des Arbeitsmediums auf.

Die Laufschaufeln 5 weisen jeweils ein Laufschaufelblatt 7, eine an das Schaufelblatt angefügte Plattform 8, einen an die Plattform 8 angefügten Fuß 9 mit einem Laufschaufel- Befestigungsabschnitt 10 auf.

Mit den jeweiligen Laufschaufel-Befestigungsabschnitten 10 sind die Laufschaufeln 5 an einer Rotorwelle 11 der Turbine 1 befestigt, in dem sie in jeweilige nutförmige Aufnahmen 12 der Rotorwelle 11 eingesetzt sind.

Die Leitschaufeln 6 weisen jeweils ein Leitschaufelblatt 3a, 3b, 3c, 3d und an ihren radial auswärtigen Enden einen Leitschaufel-Befestigungsabschnitt 14 auf, mit denen die Leitschaufeln 6 an einem ringförmigen Leitschaufelträger 15 befestigt sind. An ihren radial einwärtigen Enden weisen die Leitschaufeln 6 jeweils ein Dichtungselement 16 auf, das jeweils zwischen Laufschaufel-Befestigungsabschnitte 10 zweier benachbarter Laufschaufeln 5 angeordnet sind. Um eine Abdichtung zwischen den Laufschaufeln 5 und Leitschaufeln 6 zu verbessern weisen die Laufschaufel-Befestigungsabschnitte 10 jeweils Balkone 17 auf, die als Verlängerung an die jeweilige Plattform 8 ausgebildet sind, die sich in oder entgegen der Strömungsrichtung erstrecken.

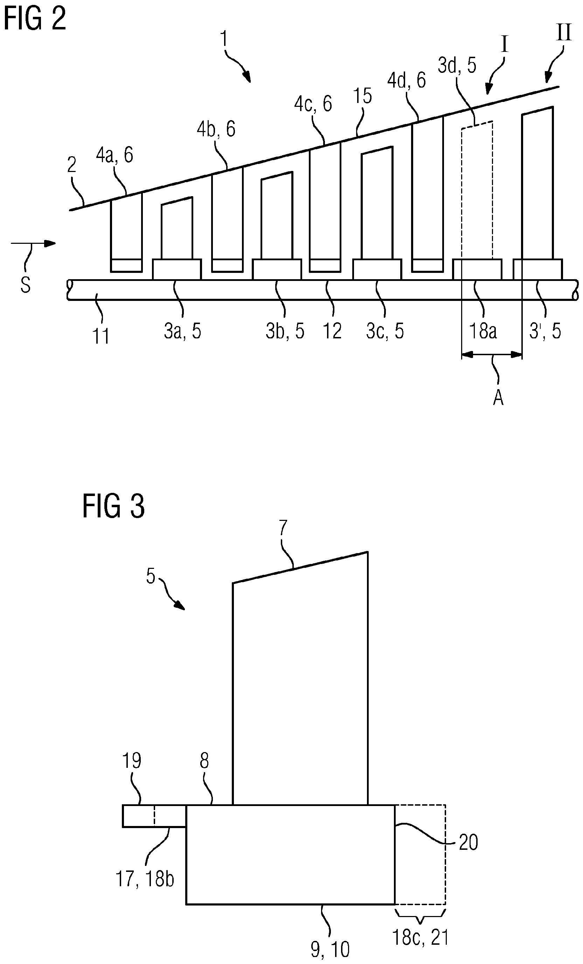

Es wird nun zusätzlich auf Fig. 2 Bezug genommen, um ein Ausführungsbeispiel eines Verfahrens zum Modifizieren der Turbine 1 zu erläutern.

Um die Turbine 1 zu modifizieren, z.B. um sie an erhöhte Leistungsanforderungen anzupassen, wird ein ursprünglicher Laufschaufelkranz 3a, 3b, 3c, 3d an einer ersten Laufschaufelposition I entfernt. Im vorliegenden Ausführungsbeispiel handelt es sich um den in Strömungsrichtung S letzten Laufschaufelkranz 3d an der ersten Laufschaufelposition I.

Es wird dann ein Austausch-Laufschaufelkranz 3'an einer zweiten Laufschaufelposition II montiert. Mit anderen Worten, der Austausch-Laufschaufelkranz 3' an der zweiten Laufschaufelposition II ersetzt den ursprünglichen Laufschaufelkranz 3d an der ersten Laufschaufelposition I. Dabei besteht der Austausch-Laufschaufelkranz 3' aus einer Mehrzahl an Austausch-Laufschaufeln 5'.

Dabei ist die zweite Laufschaufelposition II entlang einer Erstreckungsrichtung der Rotorwelle 11 der thermischen Strömungsmaschine 1 in Strömungsrichtung des Arbeitsmediums beabstandet von der ersten Laufschaufelposition I angeordnet, wobei der Abstand A derart bemessen ist, dass der Austausch-Laufschaufelkranz 3' sich noch innerhalb des Gehäuses 2 befindet. Der Abstand A beträgt im vorliegenden Ausführungsbeispiel zwischen 3 mm bis 15 mm, z.B. 10 mm.

Abweichend vom vorliegenden Ausführungsbeispiel kann auch vorgesehen sein, z.B. den zweiten Laufschaufelkranz 3b um den Abstand A zu verlagern. In diesem Fall werden der dritte Laufschaufelkranz 3c, der vierte Laufschaufelkranz 3d sowie der zwischen dem dritten Laufschaufelkranz 3c und vierten Laufschaufelkranz 3d angeordnete dritte Leitschaufelkranz 4c um den Abstand A in Strömungsrichtung S verlagert.

Der Austausch-Laufschaufelkranz 3' weist einen größeren Außendurchmesser als der ursprüngliche Laufschaufelkranz 3d auf, der an einen Innendurchmesser des Gehäuses 2 an der zweiten Laufschaufelposition II angepasst ist.

Um den Austausch-Laufschaufelkranz 3' an der zweiten Laufschaufelposition II festzulegen ist ein Positionierelement 18a vorgesehen. Das Positionierelement 18a ist im vorliegenden Ausführungsführungsbeispiel als Distanzscheibe oder Ring ausgebildet und auf die Rotorwelle 11 aufgeschoben worden, bevor der Austausch-Laufschaufelkranz 3' montiert wird.

Es wird nun unter Bezugnahme auf Fig. 3 ein zweites Ausführungsbeispiel des Positionierelements 18b erläutert.

Das Positionierelement 18b ist gemäß dem zweiten Ausführungsbeispiel an dem Austausch-Laufschaufelkranz 3' angeformt, z.B. in Form einer Verlängerung 19 des Balkons 17. Alternativ oder zusätzlich kann vorgesehen sein, dass das Positionierelement 18b durch eine rückwärtige Kontaktfläche 20 gebildet ist, die durch eine Verkürzung 21 des Fußes 9 entgegen der Strömungsrichtung S nach vorne verlagert ist. Mit anderen Worten, an der Rückseite des Fußes 8 wird Material abgetragen, sodass aufgrund des verkürzten Fußes 8 der Austausch-Laufschaufelkranz 3' in Strömungsrichtung S verlagert werden kann.

So kann mit geringem Aufwand eine Turbine 1 modifiziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Modifizieren einer Turbine (1) mit in einem konisch ausgebildeten Gehäuse (2) angeordneten Laufschaufelkränzen (3a, 3b, 3c, 3d) und Leitschaufelkränzen (4a, 4b, 4c, 4d), bei dem ein ursprünglicher Laufschaufelkranz (3a, 3b, 3c, 3d) an einer ersten Laufschaufelposition (I) durch einen Austausch-Laufschaufelkranz (3') an einer zweiten Laufschaufelposition (II) ersetzt wird,
wobei die zweite Laufschaufelposition (II) entlang einer Erstreckungsrichtung einer Rotorwelle der Turbine (1) in Strömungsrichtung (S) eines die Turbine (1) durchströmenden Arbeitsmediums beabstandet von der ersten Laufschaufelposition (I) angeordnet wird.

2. Verfahren nach Anspruch 1,
wobei der Austausch-Laufschaufelkranz (3') einen größeren Außendurchmesser als der ursprüngliche Laufschaufelkranz (3a, 3b, 3c, 3d) aufweist.

3. Verfahren nach Anspruch 1 oder 2,
wobei ein Positionierelement (18a, 18b) zur Festlegung des Austausch-Laufschaufelkranz (3') an der zweiten Laufschaufelposition (II) zwischen dem Austausch-Laufschaufelkranz (3a, 3b, 3c, 3d') und einem Leitschaufelkranz (4a, 4b, 4c, 4d) angeordnet wird.

4. Verfahren nach Anspruch 3,
wobei als Positionierelement (18a) ein separates Bauteil verwendet wird.

5. Verfahren nach Anspruch 4,
wobei ein als Distanzscheibe oder Ring ausgebildetes Positionierelement (18a) verwendet wird.

6. Verfahren nach einem der Ansprüche 3 bis 5,
wobei das Positionierelement (18b) an dem Austausch-Laufschaufelkranz (3') angeformt wird

7. Verfahren nach Anspruch 6,
wobei das Positionierelement (18b) durch eine Verlängerung (19) an einem Balkon (17) eines Fußes (8) einer Austausch-Laufschaufel (5') des Austausch-Laufschaufelkranz (3') gebildet wird.

8. Verfahren nach einem der Ansprüche 1 bis 7,
wobei ein Positionierelement (18c) zur Festlegung des Austausch-Laufschaufelkranz (3') an der zweiten Laufschaufelposition (II) durch eine Verkürzung (21) eines Fußes (9) einer Austausch-Laufschaufel (5') des Austausch-Laufschaufelkranz (3') gebildet wird.

9. Turbine (1), modifiziert nach einem Verfahren gemäß einem der Ansprüche 1 bis 8.

10. Austausch-Laufschaufelkranz (3') für eine Turbine nach Anspruch 9.

11. Austausch-Laufschaufel (5') für einen Austausch-Laufschaufelkranz (3') nach Anspruch 10.
